# EUROPÄISCHE PATENTSCHRIFT

(11) **EP 1 390 725 B1**
(45) Veröffentlichungstag und Bekanntmachung des Hinweises auf die Patenterteilung: **23.12.2015**
(21) Anmeldenummer: 02747328.9
(22) Anmeldetag: 28.05.2002
(51) Int. Cl.: G01N 21/64, G02B 27/10

(54) **VERWENDUNG VON OPTISCHEN DIFFRAKTIONSELEMENTEN IN NACHWEISVERFAHREN**
USE OF OPTICAL DIFFRACTION ELEMENTS IN DETECTION METHODS
UTILISATION D'ELEMENTS DE DIFFRACTION OPTIQUES DANS DES PROCEDES DE DETECTION

(30) Priorität: 29.05.2001 DE 10126083
(43) Veröffentlichungstag der Anmeldung: 25.02.2004
(73) Patentinhaber: Gnothis Holding SA, 1015 Ecublens (CH)
(72) Erfinder: RIGLER, Rudolf, CH-1025 St-Sulpice (CH); BLOM, Hans, S-164 72 Kista (SE); JOHANSSON, Mathias, S-504 45 Boras (SE); HARD, Sverkers, S-412 70 Goteborg (SE)
(74) Vertreter: Weickmann & Weickmann
(86) Internationale Anmeldenummer: PCT/EP2002/005866
(87) Internationale Veröffentlichungsnummer: WO 2002/097406

(56) Entgegenhaltungen:
- DE-A- 19 748 211
- US-A- 6 055 106
- US-B1- 6 208 411
- PATENT ABSTRACTS OF JAPAN vol. 1996, no. 09, 30. September 1996 (1996-09-30) & JP 08 131820 A (MORITETSUKUSU:KK), 28. Mai 1996 (1996-05-28)
- JOHANSSON M ET AL: "DESIGN, FABRICATION, AND EVALUATION OF A MULTICHANNEL DIFFRACTIVE OPTIC ROTARY JOINT" APPLIED OPTICS, OPTICAL SOCIETY OF AMERICA,WASHINGTON, US, Bd. 38, Nr. 8, 10. März 1999 (1999-03-10), Seiten 1302-1310, XP000823450 ISSN: 0003-6935 in der Anmeldung erwähnt

## Beschreibung

Die Erfindung betrifft ein Verfahren- zur Bestimmung von lumineszierenden Molekülen durch optische Anregung in konfokalen Messvolumina unter Verwendung eines diffraktiven optischen Elements. Das Verfahren eignet sich besonders zur Einzelmolekülbestimmung, z.B. durch Fluoreszenz-Korrelationsspektroskopie oder durch dynamische Lichtstreuung. Weiterhin wird eine zur Durchführung des erfindungsgemäßen Verfahrens geeignete Vorrichtung offenbart.

Die Verwendung der Fluoreszenz-Korrelationsspektroskopie (FCS) zum Nachweis von Analyten ist bekannt. EP-B-0 679 251 offenbart Verfahren und Vorrichtungen zur Detektion von Analyten mittels Fluoreszenzspektroskopie, wobei die Bestimmung in einem konfokalen Messvolumen durchgeführt wird, das Teil der zu untersuchenden Probe ist. Die parallele Bestimmung in einer Vielzahl von Messvolumina ist jedoch nur bedingt und unter großem technischen Aufwand möglich.

Schwille et al. (Biophysical Journal, 72 1997, 1878) offenbaren ein Verfahren zur Untersuchung von Diffusion und chemischen Reaktionssystemen von Fluoreszenz-markierten Molekülen in nanomolaren Konzentrationen durch Fluoreszenzkorrelationsanalyse.

WO 00/58715 offenbart eine Vorrichtung sowie ein Verfahren zur Ausführung von mehreren biochemischen Assays gleichzeitig. Die Vorrichtung umfasst eine Laserlichtquelle, ein Beugungsgitter, um das Licht in mehrere Anregungsstrahlen aufzuspalten, einen Probenhalter, der mehrere Proben enthält, sowie einen Detektor. WO 00/58715 gibt allerdings keinen Hinweis auf die Technik der konfokalen Fluoreszenzspektroskopie.

Eine der vorliegenden Anmeldung zugrunde liegende Aufgabe bestand darin, Verfahren und Vorrichtungen zur Bestimmung von lumineszierenden Molekülen, insbesondere durch Fluoreszenz-Korrelationsspektroskopie bereitzustellen, die auf einfache Weise eine parallele Bestimmung in multiplen konfokalen Volumenelementen erlaubt.

Ein Gegenstand der Erfindung ist somit ein Verfahren zur Bestimmung von lumineszierenden Molekülen durch optische Anregung in konfokalen Messvolumina umfassend die Schritte:
(a) Bereitstellen einer Probe umfassend lumineszierende Moleküle
(b) Bestrahlen der Probe mit einer optischen Anregungseinrichtung umfassend eine Lichtquelle, ein diffraktives optisches Element zur Aufspaltung von hindurchtretendem Licht in multiple Teilstrahlen und eine Fokussieroptik zur Fokussierung von hindurchtretenden multiplen Teilstrahlen in multiple konfokale Volumenelemente mit einer Größe von 10⁻¹⁸ bis 10⁻⁹ l und
(c) Auffangen von Emissionsstrahlung aus den multiplen konfokalen Volumenelementen.

Überraschenderweise wurde gefunden, dass die Aufspaltung von in die Probe eingestrahlten Anregungslicht mittels diffraktiver optischer Elemente die Herstellung multipler konfokaler Volumenelemente unter Beibehaltung einer zur Detektion ausreichenden Lichtintensität erlaubt. Dieses Prinzip lässt sich für die Herstellung multipler konfokaler Punktfoci zur Detektion einzelner Moleküle oder einer geringen Anzahl, z.B. bis zu 100 Molekülen, in konfokalen Volumenelementen mit Hilfe geeigneter Anregungs- bzw. Detektionsverfahren verwenden.

Durch neue Mikrostruktur-Fertigungstechnologien gelingt es, optische Elemente mit einer zuvor berechneten dreidimensionalen Struktur anzufertigen, die ein vorbestimmtes Beugungsgitter für eine Lichtquelle darstellt. Dabei wird ein gewünschtes, durch Lichtbeugung erzeugtes Punktmuster mittels Fourier-Transformation in eine dreidimensionale diffraktive Struktur umgerechnet, die anschließend aus einem geeigneten Material, beispielsweise mittels photolithographischer Ätzung hergestellt wird.

Als diffraktive optische Elemente können beispielsweise dreidimensionale, gegebenenfalls auf einen optisch transparenten Träger aufgebrachte optische Gitter verwendet werden, welche hindurchtretendes Licht beugen und in der Objektebene durch konstruktive und destruktive Interferenz ein vorbestimmtes Beugungsmuster, d.h. eine gewünschte Anordnung multipler optischer Foci erzeugen. Ein wesentlicher Vorteil bei der Verwendung solcher diffraktiven optischen Elemente besteht darin, dass durch die Form des optischen Gitters beliebige Anordnungen der Teilstrahlen gewählt werden können. Dabei werden die multiplen Teilstrahlen vorzugsweise durch Interferenzen 1. Ordnung gebildet, wobei nur geringe Lichtverluste durch Interferenzen der 0. bzw. höherer Ordnungen auftreten.

Die Herstellung geeigneter diffraktiver optischer Elemente ist beispielsweise in der Dissertation von F. Nikolaef am Chalmers Institute of Technologies (1999), in der Dissertation von M. Johansson am Chalmers Institute of Technologies (2001) sowie in der Publikation Johansson und Härd (Applied Optics 38 (1999), 1302-1310) beschrieben. Als Materialien zur Herstellung der optischen Elemente sind Kunststoffe, Glas und Verbundstoffe bzw. andere Materialien mit optischer Transparenz für eine gegebene Wellenlänge geeignet, die durch photolithographische Ätzung bearbeitet werden können.

Eine bevorzugte Ausführungsform des erfindungsgemäßen Verfahren betrifft den Nachweis von in den konfokalen Messvolumina lumineszierenden Molekülen durch Fluoreszenz-Korrelationsspektroskopie. Das Verfahren kann grundsätzlich nach der in EP-B-0 679 251 beschriebenen Methode durchgeführt werden. Dabei erfolgt vorzugsweise die Messung von einem oder wenigen Analytmolekülen in einem Messvolumen, wobei die Konzentration der zu bestimmenden Analytmoleküle vorzugsweise ≤ 10⁻⁶ mol/l beträgt und das Messvolumen vorzugsweise ≤ 10⁻¹⁴ ist. Es werden stoffspezifische Parameter bestimmt, die durch Lumineszenzmessung an den Analytmolekülen ermittelt werden. Bei diesen Parametern kann es sich um Translationsdiffusions-Koeffizienten, Rotationsdiffusions-Koeffizienten oder/und um die Exzitationswellenlänge, die Emissionswellenlänge oder/und die Lebensdauer eines angeregten Zustandes eines lumineszierenden Moleküls oder die Kombination von einer oder mehrerer dieser Messgrößen handeln. Auf Einzelheiten zu apparativen Details wird auf die Offenbarung von EP 0 679 251 verwiesen.

Ein bevorzugtes Merkmal des erfindungsgemäßen Verfahrens besteht darin, dass der Abstand zwischen dem Messvolumen in der Probenflüssigkeit und der Fokussieroptik der Lichtquelle ≥ 1 mm, vorzugsweise 1,5 bis 10 mm und besonders bevorzugt 2 bis 5 mm beträgt. Weiterhin ist bevorzugt, dass zwischen dem die Probenflüssigkeit enthaltenden Träger und der optischen Fokussiereinrichtung ein Gasphasenbereich angeordnet ist, der Luft, Schutzgas oder Vakuum enthalten kann. Verfahren und Vorrichtungen zur Durchführung von FCS mit großem Abstand zwischen Fokussieroptik und konfokalem Messvolumen sind in DE 101 11 420.6 beschrieben.

Das erfindungsgemäße Verfahren ist grundsätzlich zur Durchführung beliebiger Bestimmungsverfahren geeignet. Eine bevorzugte Ausführungsform betrifft die Bestimmung eines Analyten in einer Probe, z.B. für diagnostische Anwendungen oder für ein Screening zur Identifizierung von Wirkstoffen, die mit einer Zielsubstanz wechselwirken. Hierzu werden eine oder mehrere Analyt-bindende Substanzen der Probe zugegeben, die eine durch Lumineszenzmessung nachweisbare Markierungsgruppe, insbesondere Fluoreszenz-Markierungsgruppe tragen. Das erfindungsgemäße Verfahren umfasst in diesem Fall vorzugsweise eine Bestimmung der Bindung der Markierungssubstanz an den nachzuweisenden Analyten. Dieser Nachweis kann beispielsweise durch Mobilitätsänderung der Markierungsgruppe auf Grund der Bindung an den Analyten bzw. durch Änderung der Lumineszenz der Markierungsgruppe (Intensität oder/und Abklingzeit) auf Grund der Bindung an den Analyten bzw. bei Verwendung mehrerer Markierungsgruppen - durch die sogenannte Kreuzkorrelation erfolgen. Beider Kreuzkorrelationsbestimmung werden mindestens zwei unterschiedliche Markierungen, insbesondere Fluoreszenzmarkierungen, eingesetzt, deren korreliertes Signal innerhalb des Messvolumens bestimmt wird. Diese Kreuzkorrelationsbestimmung ist beispielsweise bei Schwille et al. (Biophys. J. 72 (1997), 1878-1886) und Rigler et al. (J. Biotechnol. 63 (1998), 97-109) beschrieben.

Insbesondere eignet sich das erfindungsgemäße Verfahren zum Nachweis von Biomolekülen, z.B. Nukleinsäuren, Proteinen oder anderen, in lebenden Organismen, insbesondere in Säugern wie dem Menschen vorkommenden, Analytmolekülen. Darüber hinaus können auch Analyten nachgewiesen werden, die in vitro aus biologischen Proben erzeugt worden sind, z.B. cDNA-Moleküle, die durch Reverse Transkription aus mRNA hergestellt worden sind, oder Proteine, die durch in vitro Translation aus mRNA bzw. aus DNA hergestellt worden sind. Weiterhin eignet sich das Verfahren zum Nachweis von Analyten, die als Elemente einer Bibliothek vorliegen und vorbestimmte Charakteristika, z.B. Bindung an das Nachweisreagenz, zeigen sollen. Beispiele solcher Bibliotheken sind Phagenbibliotheken oder ribosomale Bibliotheken.

In einer besonders bevorzugten Ausführungsform umfasst die Bestimmung eine Nukleinsäurehybridisierung, wobei eine oder mehrere lumineszenzmarkierte Sonden an eine Zielnukleinsäure als Analyten binden. Derartige Hybridisierungsverfahren können beispielsweise zur Analyse der Genexpression, z.B. zur Ermittlung eines Genexpressionsprofils, zur Analyse von Mutationen, z.B. Einzelnukleotidpolymorphismen (SNP) eingesetzt werden. Das erfindungsgemäße Verfahren eignet sich jedoch auch zur Bestimmung enzymatischer Reaktionen oder/und zur Bestimmung von Nukleinsäureamplifikationen, insbesondere in einem Thermocycling-Prozess. Bevorzugte Verfahren zur Bestimmung von NukleinsäurePolymorphismen sind in DE 100 56 226.4 und DE 100 65 631.5 beschrieben. Dabei wird besonders bevorzugt eine Zwei- oder Mehrfarben-Kreuzkorrelationsbestimmung durchgeführt.

In einer weiteren besonders bevorzugten Ausführungsform umfasst die Bestimmung den Nachweis einer Protein-Protein- oder Protein-Ligand-Wechselwirkung, wobei als Proteinliganden z.B. niedermolekulare Wirkstoffe, Peptide, Nukleinsäuren etc. eingesetzt werden können. Auch für derartige Bestimmungen wird bevorzugt eine Zwei- der Mehrfarbenkorrelationsmessung durchgeführt.

In einer alternativen bevorzugten Ausführungsform können sogenannte "Molecular Beacon" Sonden oder Primer eingesetzt werden, die - wenn sie in freier Form vorliegen - ein hinsichtlich der Lumineszenzintensität oder/und -abklingzeit verschiedenes Messsignal als in gebundenem Zustand ergeben.

Eine weitere bevorzugte Ausführungsform der Erfindung umfasst ein Verfahren zur Selektion von Partikeln in einer Substanzbibliothek, wobei ein Partikel mit einer vorbestimmten Eigenschaft aus einer Population, umfassend eine Vielzahl von unterschiedlichen Partikeln, selektioniert wird. Hierzu wird vorzugsweise eine Population von unterschiedlichen Partikeln bereitgestellt, Partikel, die eine vorbestimmte Eigenschaft aufweisen, markiert, die Partikel in einem Mikrokanal durch ein Detektionselement, umfassend multiple konfokale Volumenelemente, geleitet, um zwischen markierten und nichtmarkierten Partikeln zu unterscheiden und markierte Partikel abgetrennt. Die Schritte des Leitens und des Abtrennens werden vorzugsweise mindestens einmal wiederholt, wobei die Konzentration der Partikel in einem nachfolgenden Zyklus gegenüber einem vorhergehenden Zyklus vorzugsweise um mindestens den Faktor 10⁴ verringert wird. Die Partikel können beispielsweise aus Zellen, Teilen von Zelloberflächen, Zellorganellen, Viren, Nukleinsäuren, Proteinen und niedermolekularen Substanzen ausgewählt werden. Das Verfahren eignet sich auch zur Selektion von Partikeln aus einer kombinatorischen Bibliothek, die genetische Packungen wie Phagen, Zellen, Sporen oder Ribosomen enthalten kann. Die Partikelpopulation enthält vorzugsweise mehr als 10⁶ und besonders bevorzugt mehr als 10¹⁰ unterschiedliche Partikel. Die Partikel werden vorzugsweise mit einer Lumineszenz-markierungsgruppe markiert.

Noch eine weitere Ausführungsform umfasst die Durchführung einer Sequenzanalyse von Polymeren, insbesondere Biopolymeren, wobei lumeszierende Fragmente eines in der Probe vorhandenen Analyten bestimmt werden. Diese Ausführungsform ist insbesondere zur Durchführung einer Nukleinsäure-Sequenzierung geeignet. Hierzu wird vorzugsweise ein Trägerpartikel mit einem darauf immobilisierten Nukleinsäuremolekül bereitgestellt, wobei im Wesentlichen alle Nukleotidbausteine von mindesten einem Basentyp in mindestens einem Strang des Nukleinsäuremoleküls eine Fluoreszenzmarkierung tragen. Das Trägerpartikel wird in eine Sequenziervorrichtung umfassend einen Mikrokanal eingebracht, dort, z.B. mit einem IR-Einfanglaser festgehalten und, z.B. durch Behandlung mit einer Exonuklease, fortschreitend einzelne Nukleotidbausteine von dem immobilisierten Nukleinsäuremolekül abgespalten. Die abgespaltenen Nukleotidbausteine werden dann durch einen Mikrokanal, vorzugsweise mittels eines hydrodynamischen Flusses, geleitet und dort in konfokalen Volumenelementen die Basenfolge des Nukleinsäuremoleküls aufgrund der Abfolge der abgespaltenen Nukleotidbausteine bestimmt.

Das erfindungsgemäße Verfahren ermöglicht die Aufspaltung eines von einer Lichtquelle, z.B. einem Laser, stammenden Lichtstrahls in mehrere Teilstrahlen. In einer bevorzugten Ausführungsform des Verfahrens wird der Lichtstrahl in 2-32, insbesondere in 4-16 Teilstrahlen aufgespalten. Durch Verwendung einer geeigneten Fokussieroptik werden aus diesen Teilstrahlen konfokale Volumenelemente in der Probe abgebildet. Die konfokalen Volumenelementen haben vorzugsweise eine Größe von 10⁻¹⁸ bis 10⁻¹² l und besonders bevorzugt von 10⁻¹⁶ bis 10⁻¹⁴ l. Zum Auffangen von Strahlung, insbesondere Emissionsstrahlung aus den multiplen konfokalen Volumenelementen, wird vorzugsweise jeweils ein separater Detektor pro Volumeneinheit oder eine ortsauflösende Detektionsmatrix, z.B. eine Avalanche-Fotodiodenmatrix oder eine elektronische Detektormatrix, z.B. eine CCD-Kamera, verwendet.

Die Aufspaltung des Lichtstrahls in mehrere Teilstrahlen erlaubt die parallele Bestimmung in separaten konfokalen Volumenelementen. In einer bevorzugten Ausführungsform sind diese konfokalen Volumenelemente in jeweils separaten Behältnissen eines Träger, vorzugsweise einer Mikrostruktur, vorgesehen.

Das Volumen dieser Behältnisse liegt vorzugsweise im Bereich von ≤ 10⁻⁶ l und besonders bevorzugt ≤ 10⁻⁸ l bis 10⁻¹² l. So kann der Träger eine Mikrowellstruktur mit mehreren Vertiefungen zur Aufnahme von Probeflüssigkeit umfassen, die beispielsweise einen Durchmesser zwischen 10 und 1000 µm aufweisen. Geeignete Mikrostrukturen sind z.B. in DE 100 23 421.6 und DE 100 65 632.3 beschrieben. Diese Mikrostrukturen können beispielsweise zur Bestimmung einer Nukleinsäure-Hybridisierung in Lösung eingesetzt werden. Weiterhin umfasst der Träger vorzugsweise mindestens ein Temperatur-Steuerungselement, z.B. ein Peltier-Element, welches eine Temperaturregelung des Träger oder/und einzelner Probenbehältnisse darin ermöglicht.

Der für das Verfahren verwendete Träger ist zweckmäßigerweise so ausgestaltet, dass er eine optische Detektion der Probe ermöglicht. Vorzugsweise wird daher ein zumindest im Bereich der Probenbehältnisse optisch transparenter Träger verwendet. Der Träger kann dabei entweder vollständig optisch transparent sein oder eine optisch transparente Basis und eine optisch undurchlässige Deckschicht mit Aussparungen in den Probenbehältnissen enthalten. Geeignete Materialien für Träger sind beispielsweise Verbundstoffträger aus Metall (z.B. Silicium für die Deckschicht) und Glas (für die Basis). Derartige Träger können beispielsweise durch Aufbringen einer Metallschicht mit vorgegebenen Aussparungen für die Probenbehältnisse auf das Glas erzeugt werden. Alternativ können Plastikträger, z.B. aus Polystyrol oder Polymeren auf Acrylat- oder Methacrylatbasis eingesetzt werden. Weiterhin ist bevorzugt, dass der Träger eine Abdeckung für die Probenbehältnisse aufweist, um während der Messung ein geschlossenes und von der Umgebung im Wesentlichen isoliertes System bereitzustellen.

In einer besonders bevorzugten Ausführungsform wird ein Träger verwendet, der ein Linsenelement enthält, das im Strahlengang zwischen Messvolumen und Lichtquelle bzw. Detektor der optischen Vorrichtung angeordnet ist. Beispielsweise kann das Linsenelement am Boden einer Mikrowellstruktur angebracht sein. Ein derartiges Linsenelement lässt sich beispielsweise durch Erhitzen und Formen eines Fotoresists unter Verwendung einer Master-Form, z.B. aus Metall wie Silicium, erzeugen und dann auf den Träger aufgebracht werden. Alternativ können - z.B. bei Verwendung von Trägern aus Vollplastikstruktur - die Linsenelemente in den Träger integriert, z.B. während der Herstellung durch Spritzgießen erzeugt werden. Durch Verwendung eines Linsenelements, vorzugsweise eines konvexen Linsenelements, kann die numerische Apertur der optischen Messanordnung vergrößert werden. Diese numerische Apertur liegt vorzugsweise im Bereich von 0,5 bis 1,2.

Der Träger ist weiterhin vorzugsweise mit einem transparenten Antireflexionsüberzug beschichtet, um einen höheren Brechungsindex zu erzeugen. Als Antireflexionsüberzüge können beispielsweise transparente Oxide oder Nitride eingesetzt werden. Antireflexionsbeschichtungen werden vorzugsweise auch auf der Optik verwendet.

Weiterhin können im Träger elektrische Felder, insbesondere im Bereich der Probenbehältnisse erzeugt werden, um eine Konzentrierung der zu bestimmenden Analyten im Messvolumen zu erreichen. Beispiele für Elektroden, die zur Erzeugung solcher elektrischen Felder geeignet sind, sind z.B. in DE 101 03 304.4 beschrieben.

Das zu bestimmende Molekül kann - insbesondere bei einer Bestimmung im Mikrowellformat oder bei der Einzelmolekülsequenzierung - an ein Trägerpartikel gebunden sein. Das Trägerpartikel hat eine Größe, die eine Bewegung in Mikrokanälen und das Festhalten an einer gewünschten Position innerhalb einer Sequenzierungsvorrichtung ermöglicht. Die Partikelgröße liegt vorzugsweise im Bereich von 0,5-10 µm und besonders bevorzugt von 1-3 µm. Beispiele für geeignete Materialien von Trägerpartikeln sind Kunststoffe, wie Polystyrol, Glas, Quarz, Metalle oder Halbmetalle, wie Silicium, Metalloxide, wie Siliciumdioxid, oder Verbundmaterialien, die mehrere der zuvor genannten Komponenten enthalten. Besonders bevorzugt werden optisch transparente Trägerpartikel, beispielsweise aus Kunststoffen oder Partikel mit einem Kunststoffkern und einer Siliciumdioxidhülle eingesetzt.

Nukleinsäuremoleküle werden vorzugsweise über ihr 5'-Ende auf dem Trägerpartikel immobilisiert, z.B. durch kovalente oder nichtkovalente Wechselwirkung. Besonders bevorzugt erfolgt die Bindung von Polynukleotiden an den Träger durch hochaffine Wechselwirkungen zwischen den Partnern eines spezifischen Bindepaares, z.B. Biotin/Streptavidin oder Avidin etc. Alternativ können Nukleinsäuremoleküle auch adsorptiv oder kovalent an den Träger gebunden werden.

Vorzugsweise verwendet man Trägerpartikel, an die nur ein einziges Nukleinsäuremolekül gebunden ist. Derartige Trägerpartikel können dadurch erzeugt werden, dass die zur Bestimmung vorgesehenen Nukleinsäuremoleküle in einem molaren Verhältnis von vorzugsweise 1:5 bis 1:20, z.B. 1:10, mit den Trägerpartikeln unter Bedingungen in Kontakt gebracht werden, bei denen eine Immobilisierung der Nukleinsäuremoleküle an den Träger stattfindet.

Die an einen Träger gebundenen Nukleinsäuremoleküle, z.B. DNA-Moleküle oder RNA-Moleküle, können in einzelsträngiger Form oder doppelsträngiger Form vorliegen. Vorzugsweise liegen die Nukleinsäuremoleküle in einzelsträngiger Form vor. Beim Einsatz für die Sequenzierung tragen im Wesentliche alle, z.B. mindestens 90 %, vorzugsweise mindestens 95 % aller Nukleotidbausteine von mindestens einem Basentyp, eine Fluoreszenzmarkierungsgruppe. Es können auch im Wesentlichen alle Nukleotidbausteine von mindestens 2 Basentypen, beispielsweise 2, 3 oder 4 Basentypen, eine Fluoreszenzmarkierung tragen, wobei jeder Basentyp günstigerweise eine unterschiedliche Fluoreszenzmarkierungsgruppe enthält. Derart markierte Nukleinsäuren können durch enzymatische Primerextension an einer Nukleinsäurematrize unter Verwendung einer geeigneten Polymerase, z.B. einer thermostabilen DNA-Polymerase, erzeugt werden. Eine genaue Beschreibung dieses Verfahrens findet sich in DE 100 31 840.1 und DE 100 65 626.9 sowie den dort angegebenen Literaturzitaten.

Noch ein weiterer Gegenstand der vorliegenden Erfindung ist eine Vorrichtung zur Bestimmung von lumineszierenden Molekülen, insbesondere zur Durchführung eines Verfahrens wie zuvor beschrieben, umfassend
(a) einen Träger mit mehreren separaten Behältnissen oder mit einer Mikrokanalstruktur mit einem oder mehreren mikrokanälen zur Aufnahme einer Probe, die zu bestimmende lumineszierende Moleküle enthält,
(b) eine optische Anregungseinrichtung, umfassend eine Lichtquelle, ein diffraktives optisches Element zur Aufspaltung von hindurchtretendem Licht in multiple Teilstrahlen und eine Fokussieroptik zur Fokussierung von hindurchtretenden multiplen Teilstrahlen in multiple konfokale Volumenelemente mit einer Größe von 10⁻¹⁸ bis 10⁻⁹ l zur Anregung von Lumineszenz in den multiplen konfokalen Volumenelementen und
(c) eine optische Detektionseinrichtung zum Nachweis von Lumineszenz aus den multiplen konfokalen Volumenelementen.

Der Träger ist vorzugsweise eine Mikrostruktur mit mehreren, vorzugsweise mindestens 10, besonders bevorzugt mindestens 10² Behältnissen zur Aufnahme einer Probeflüssigkeit, wobei die Probeflüssigkeit in den separaten Behältnissen aus einer oder mehreren Quellen stammen kann. Das Einbringen der Probeflüssigkeit in die Behältnisse des Trägers kann z.B. mittels einer piezoelektrischen Flüssigkeitsabgabe-Vorrichtung erfolgen.

Die Behältnisse des Trägers sind so ausgestaltet, dass sie eine Bindung des Nachweisreagenz mit dem Analyten in Lösung ermöglichen. Vorzugsweise handelt es sich bei den Behältnissen um Vertiefungen in der Trägeroberfläche, wobei diese Vertiefungen grundsätzlich eine beliebige Form aufweisen können, z.B. kreisförmig, quadratisch, rautenförmig etc. Der Träger kann auch 10³ oder mehr separate Behältnisse umfassen.

Alternativ kann der Träger auch eine Mikrokanalstruktur mit einem oder mehreren Mikrokanälen enthalten, die insbesondere für ein Einzelmolekül-Sequenzierungsverfahren, wie in DE 100 31 840.1 und DE 100 65 626.9 beschrieben, oder für ein Partikel-Selektionsverfahren, wie in DE 100 31 028.1 beschrieben, geeignet sind.

Die optische Anregungseinrichtung umfasst eine stark fokussierte Lichtquelle, vorzugsweise einen Laserstrahl, der mittels entsprechender optischer Einrichtungen auf das Messvolumen in der Probenflüssigkeit fokussiert wird. Die Lichtquelle kann auch zwei oder mehrere Laserstrahlen enthalten, die dann jeweils vor Eintritt in die Probeflüssigkeit durch unterschiedliche Optiken auf das Messvolumen fokussiert wird. Wenn zwei oder mehrere Laserstrahlen verwendet werden, kann für jeden Laserstrahl ein separates diffraktives optisches Element verwendet werden.

Die Detektionseinrichtung kann beispielsweise einen fasergekoppelten Avalanche-Fotodiodendetektor oder einen elektronischen Detektor enthalten. Es können jedoch auch Anregungs- oder/und Detektions-Matrices, bestehend aus einer Punktmatrix von Laserpunkten, erzeugt durch eine Diffraktionsoptik oder einen Quanten-Well-Laser sowie einer Detektormatrix, erzeugt durch eine Avalanche-Fotodiodenmatrix oder eine elektronische Detektormatrix, z.B. eine CCD-Kamera, verwendet werden.

Der Träger kann in vorgefertigter Form bereit gestellt werden, wobei in mehrere separate Behältnisse des Trägers lumineszenzmarkierte Nachweisreagenzien, vorzugsweise lumineszenzmarkierte Hybridisierungssonden bzw. -primer eingefüllt werden. Anschließend wird der die Nachweisreagenzien enthaltende Träger günstigerweise getrocknet.

In einer bevorzugten Ausführungsform der Erfindung wird ein vorgefertigter Träger bereitgestellt, der eine Vielzahl von separaten, z.B. 100 Behältnissen enthält, in die jeweils unterschiedliche Nachweisreagenzien, z.B. Reagenzien zum Nachweis einer Nukleinsäurehybridisierung wie Primer oder/und Sonden eingefüllt vorliegen. Dieser Träger kann dann mit einer aus einem zu untersuchenden Organismus, z.B. einem menschlichen Patienten, stammenden Probe gefüllt werden, so dass in den jeweiligen Behältnissen unterschiedliche Analyten aus einer einzigen Probe bestimmt werden. Derartige Träger können beispielsweise zur Erstellung eines Genexpressionsprofils, z.B. für die Diagnostik von Krankheiten, oder zur Bestimmung von Nukleinsäurepolymorphismen, z.B. zum Nachweis einer Obestimmten genetischen Prädisposition, verwendet werden.

Schließlich betrifft die Erfindung die Verwendung eines diffraktiven optischen Elements zur Erzeugung multipler Teilstrahlen für eine parallele Bestimmung von molekularen Wechselwirkungen in multiplen kofokalen Volumenelementen mit einer Größe von 10⁻¹⁸ bis 10⁻⁹ l für die Fluoreszenz-Korrelationsspektroskopie oder die dynamische Lichtstreuung. Die diffraktiven optischen Elemente können jedoch auch für andere Verfahren eingesetzt werden, worin die Intensitätsfluktuation durch gestreutes Licht in konfokalen Volumenelementen bestimmt wird.

Weiterhin soll die Erfindung durch die beiliegenden Figuren und Beispiele erläutert werden.

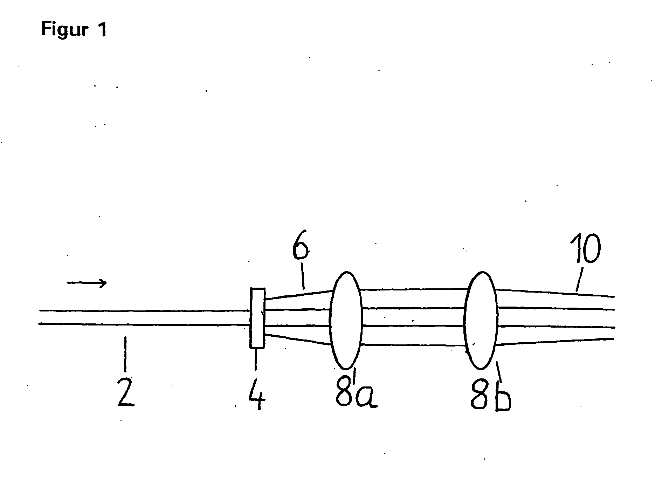

**Figur 1** zeigt die schematische Darstellung einer Ausführungsform des erfindungsgemäßen Verfahrens. Ein Lichtstrahl (2), z.B. ein Laserstrahl, wird in einen diffraktiven optischen Element (4) in mehrere, z.B. 4 Teilstrahlen (6), aufgespalten und in eine optische Fokussiereinrichtung (8a, 8b) geleitet. Die dort austretenden Teilstrahlen (10) sind so gebündelt, dass die einem vorbestimmten Abstand zur optischen Fokussiereinrichtung konfokale Volumenelemente mit vorbestimmter Größe bilden.

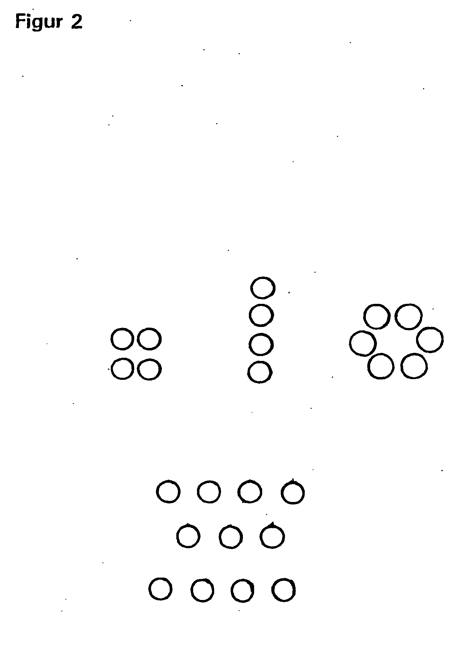

**Figur 2** zeigt beispielhafte Anordnungen für multiple Teilstrahlen, die durch das diffraktive optische Element erzeugt werden können. Grundsätzlich ist die Anordnung der Teilstrahlen frei wählbar. Die Teilstrahlen werden vorzugsweise aus Interferenzen der 1. Ordnung gebildet. Die Verluste durch Interferenzen nullter Ordnung und höherer Ordnungen sind gering und betragen vorzugsweise ≤30 %.

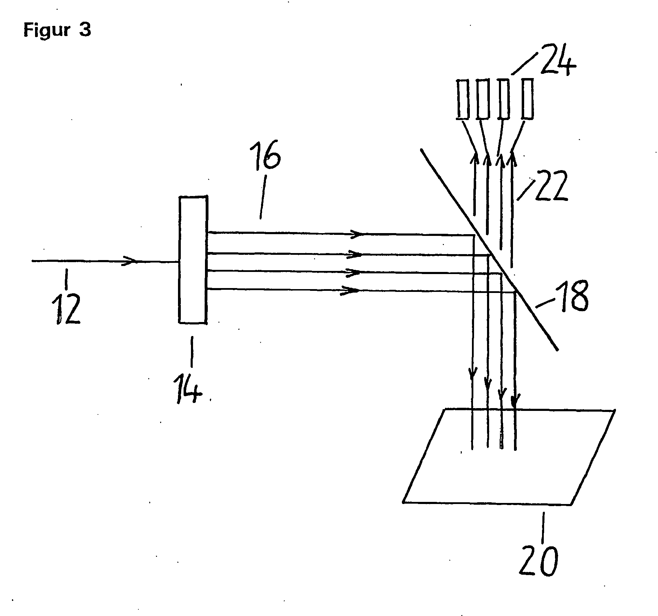

**Figur 3** zeigt eine weitere Ausführungsform des erfindungsgemäßen Verfahrens. Ein Laserstrahl (12) wird durch ein diffraktives optisches Element (14) in mehrere, z.B. 4 Teilstrahlen (16), aufgespalten, die ein vorbestimmtes Muster von Teilstrahlen erzeugen. Die Teilstrahlen werden anschließend durch einen dichroitischen Spiegel (18) umgelenkt und über eine Fokussieroptik (nicht gezeigt) auf einen Träger (20) gelenkt, wo sie mehrere konfokale Volumenelemente bilden. Von den kofokalen Volumenelementen, z.B. durch Fluoreszenz emittiertes Licht (22), wird durch Detektoren (24) aufgefangen und nachgewiesen.

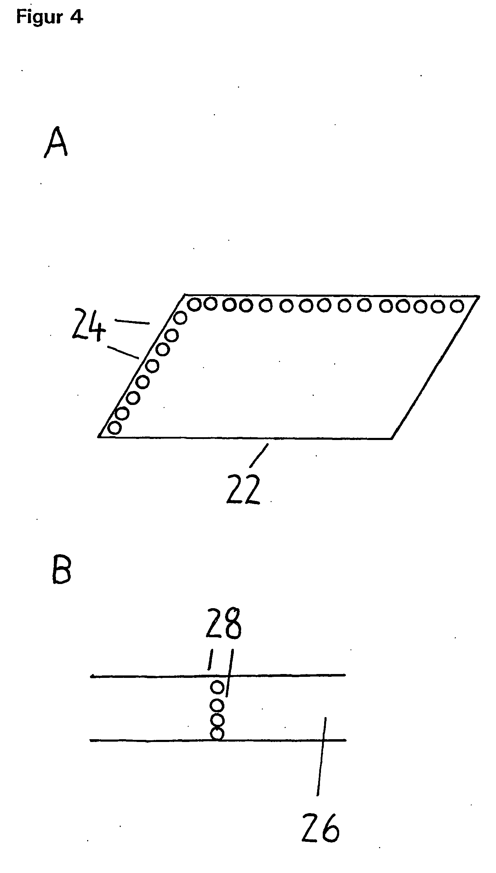

**Figur 4A und 4B** zeigen bevorzugte Ausführungsformen für geeignete Träger. Der Träger gemäß Figur 4A ist eine Mikrostruktur, z.B. in Form eines Chips, mit mindestens 10² separaten Probenbehältnissen (24). Der Abstand zwischen 2 Probenbehältnissen beträgt vorzugsweise 50-150 µm, z.B. 100-110 µm. Die Dichte der Behältnisse liegt vorzugsweise im Bereich von 100-10000 Vertiefungen pro cm². Das Probenvolumen in den einzelnen Behältnissen beträgt vorzugsweise 10⁻⁶ bis 10⁻¹² l. Innerhalb des Probenvolumens wird ein konfokales Volumenelement zur Messung von Wechselwirkungen zwischen einzelnen Molekülen bzw. einer geringen Anzahl von Molekülen gebildet. Der in Figur 4A gezeigte Träger ist insbesondere für Hochdurchsatzdiagnostik und Wirkstoffscreeningverfahren geeignet. Wenn die Anzahl der Behältnisse innerhalb des Trägers größer als die Anzahl der durch das diffraktive optische Element erzeugten Teilstrahlen ist, kann der Träger in mehreren Schritten gescannt werden. Hierzu kann die Optik oder/und der Träger durch geeignete Maßnahmen für die einzelnen Schritte jeweils neu justiert werden.
Figur 4B zeigt einen Mikrokanal (26) mit darin angeordneten konfokalen Volumenelementen (28). Diese Mikrokanalstruktur kann insbesondere zur Einzelmolekül-Sequenzierung oder zur Einzelmolekül-Selektion eingesetzt werden.

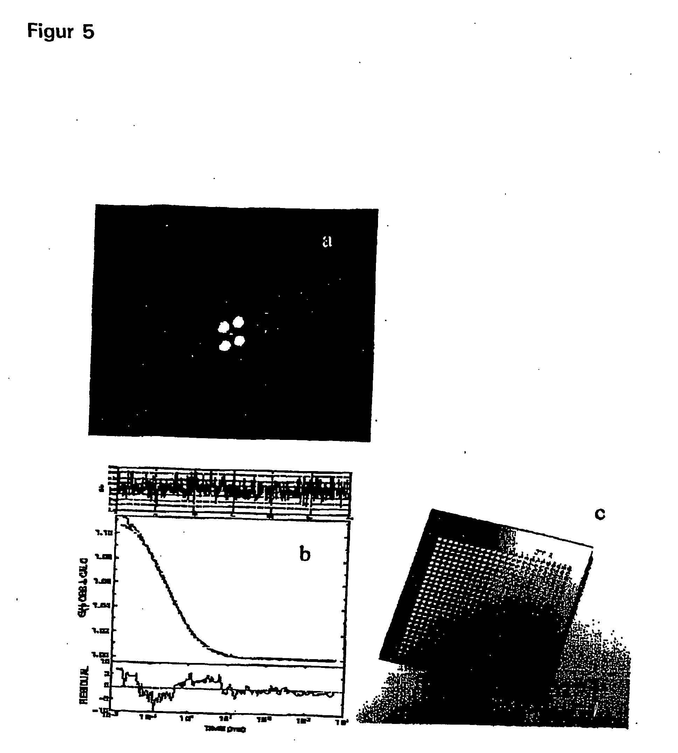

**Figur 5A** zeigt ein 2x2-Muster von multiplen Teilstrahlen (helle Flecken), erzeugt durch ein diffraktives optisches Element.
**Figur 5B** zeigt die Autokorrelationskurve von 10 Fluoreszenz-Reportermolekülen in einem der multiplen Teilstrahlen. Es wurde gefunden, dass in allen 4 Teilstrahlen die Autokorrelationskurve jeweils identisch ist.
**Figur 5C** zeigt eine Abbildung eines zur Durchführung des erfindungsgemäßen Verfahrens geeigneten Biochip-Mikroarray mit einem Durchmesser von 300 µm mit 25x25 Vertiefungen zur Aufnahme von Proben.

## Patentansprüche

1. Verfahren zur Bestimmung von lumineszierenden Molekülen durch optische Anregung in konfokalen Messvolumina umfassend die Schritte:
(a) Bereitstellen einer Probe umfassend lumineszierende Moleküle,
(b) Bestrahlen der Probe mit einer optischen Anregungseinrichtung umfassend eine Lichtquelle, ein diffraktives optisches Element (4, 14) zur Aufspaltung von hindurchtretendem Licht in multiple Teilstrahlen (6, 16) und eine Fokussieroptik (8, 18) zur Fokussierung von hindurchtretenden multiplen Teilstrahlen (10) in multiple konfokale Volumenelemente mit einer Größe von 10⁻¹⁸ bis 10⁻⁹ l und
(c) Auffangen von Emissionsstrahlung aus den multiplen konfokalen Volumenelementen.

2. Verfahren nach Anspruch 1,
**dadurch gekennzeichnet,**
**dass** die lumineszierenden Moleküle aus lumineszenzmarkierten Nachweisreagenzien ausgewählt werden, die an einen in der Probe vorhandenen Analyten binden.

3. Verfahren nach Anspruch 1 oder 2,
**dadurch gekennzeichnet,**
**dass** die Bestimmung die Messung eines kreuzkorrelierten Signals umfasst, das von einem, mindestens 2 unterschiedliche Lumineszenzmarkierungen enthaltenden, Komplex aus Analyt und Nachweisreagenz(ien) stammt.

4. Verfahren nach Anspruch 1 oder 2,
**dadurch gekennzeichnet,**
**dass** die Bestimmung die Messung eines von einem lumineszenzmarkierten Nachweisreagenzstammenden Signals umfasst, wobei die Lumineszenzintensität oder/und -abklingzeit des Nachweisreagenz bei Bindung an den Analyten verschieden als im nichtgebundenen Zustand ist.

5. Verfahren nach Anspruch 4,
**dadurch gekennzeichnet,**
**dass** die Unterschiede der Lumineszenzintensität oder/und -abklingzeit durch Quench- oder Energietransfervorgänge hervorgerufen werden.

6. Verfahren nach einem der vorhergehenden Ansprüche,
**dadurch gekennzeichnet,**
**dass** die Bestimmung eine Nukleinsäure-Hybridisierung umfasst, wobei eine oder mehrere lumineszenzmarkierte Sonden an eine Zielnukleinsäure binden.

7. Verfahren nach einem der vorhergehenden Ansprüche,
**dadurch gekennzeichnet,**
**dass** die Bestimmung eine enzymatische Reaktion umfasst.

8. Verfahren nach einem der vorhergehenden Ansprüche,
**dadurch gekennzeichnet,**
**dass** die Bestimmung eine Nukleinsäure-Amplifikation, insbesondere einen Thermocycling-Prozess umfasst.

9. Verfahren nach einem der vorhergehenden Ansprüche,
**dadurch gekennzeichnet,**
**dass** die Bestimmung eine Mutationsanalyse bei Nukleinsäuren umfasst.

10. Verfahren nach einem der vorhergehenden Ansprüche,
**dadurch gekennzeichnet,**
**dass** die Bestimmung eine Genexpressionsanalyse bei Nukleinsäuren umfasst.

11. Verfahren nach einem der vorhergehenden Ansprüche,
**dadurch gekennzeichnet,**
**dass** die Bestimmung die Messung einer temperaturabhängigen Schmelzkurve bei einer Nukleinsäure-Hybridisierung umfasst.

12. Verfahren nach einem der vorhergehenden Ansprüche,
**dadurch gekennzeichnet,**
**dass** die Bestimmung eine Partikel-Selektion umfasst.

13. Verfahren nach einem der vorhergehenden Ansprüche,
**dadurch gekennzeichnet,**
**dass** die Bestimmung eine Nukleinsäure-Sequenzierung umfasst.

14. Verfahren nach einem der vorhergehenden Ansprüche,
**dadurch gekennzeichnet,**
**dass** man als Lichtquelle einen Laser verwendet.

15. Verfahren nach einem der vorhergehenden Ansprüche,
**dadurch gekennzeichnet,**
**dass** man als diffraktives optisches Element ein dreidimensionales, gegebenenfalls auf einen optisch transparenten Träger aufgebrachte optische Gitter verwendet, das hindurchretendes Licht beugt und ein vorbestimmtes Beugungsmuster, umfassend multiple Teilstrahlen, erzeugt.

16. Verfahren nach einem der vorhergehenden Ansprüche,
**dadurch gekennzeichnet,**
**dass** die multiplen Teilstrahlen durch Interferenzen 1. Ordnung gebildet werden.

17. Verfahren nach einem der vorhergehenden Ansprüche,
**dadurch gekennzeichnet,**
**dass** ein Lichtstrahl in 2 bis 32, insbesondere 4 bis 16 Teilstrahlen aufgespalten wird.

18. Verfahren nach einem der vorhergehenden Ansprüche,
**dadurch gekennzeichnet,**
**dass** die konfokalen Volumenelemente eine Größe von 10⁻¹⁸ bis 10⁻¹² l aufweisen.

19. Verfahren nach einem der vorhergehenden Ansprüche,
**dadurch gekennzeichnet,**
**dass** zum Auffangen von Emissionsstrahlung aus den multiplen konfokalen Volumenelementen jeweils ein separater Detektor oder eine ortsauflösende Detektionsmatrix verwendet wird.

20. Verfahren nach einem der vorhergehenden Ansprüche,
**dadurch gekennzeichnet,**
**dass** der Abstand zwischen der Fokussieroptik der Lichtquelle und einem konfokalen Volumenelement ≥ 1 mm, vorzugsweise 1,5-10 mm und besonders bevorzugt 2-5 mm beträgt.

21. Verfahren nach einem der vorhergehenden Ansprüche,
**dadurch gekennzeichnet,**
**dass** die Probe von der Lichtquelle und insbesondere von der Fokussieroptik thermisch isoliert ist.

22. Verfahren nach einem der vorhergehenden Ansprüche,
**dadurch gekennzeichnet,**
**dass** die Probe in einem Träger mit mehreren, vorzugsweise mindestens 10² separaten Behältnissen bereitgestellt wird.

23. Verfahren nach einem der vorhergehenden Ansprüche,
**dadurch gekennzeichnet,**
**dass** die optische Messanordnung eine numerische Apertur von 0,5 bis 1,2 aufweist.

24. Verfahren nach einem der vorhergehenden Anspruche,
**dadurch gekennzeichnet,**
**dass** der Träger mehrere, vorzugsweise mindestens 10 separate Behältnisse zur Aufnahme von Proben enthält.

25. Verfahren nach einem der Ansprüche 1 bis 21,
**dadurch gekennzeichnet,**
**dass** die Probe in einer Mikrokanalstruktur bereitgestellt wird.

26. Verfahren nach Anspruch 25,
**dadurch gekennzeichnet,**
**dass** ein in der Probe vorhandener Analyt in der Mikrokanalstruktur festgehalten wird.

27. Verfahren nach Anspruch 25 oder 26,
**dadurch gekennzeichnet,**
**dass** ein in der Probe vorhandener Analyt einer Spaltungsreaktion unterzogen wird, wobei von dem Analyten abgespaltene Fragmente bestimmt werden.

28. Verfahren nach einem der Ansprüche 25 bis 27,
**dadurch gekennzeichnet,**
**dass** die Mikrokanalstruktur einen oder mehrerer Kanäle mit einem Durchmesser von 1-100 µm aufweist.

29. Verfahren nach einem der vorhergehenden Ansprüche,
**dadurch gekennzeichnet,**
**dass** ein in der Probe vorhandener Analyt an ein Trägerpartikel gekoppelt wird.

30. Verfahren nach Anspruch 29,
**dadurch gekennzeichnet,**
**dass** man ein Trägerpartikel aus Kunststoff, Glas, Quarz, Metallen, Halbmetallen oder aus einem Verbundmaterial verwendet.

31. Verfahren nach Anspruch 29 oder 30,
**dadurch gekennzeichnet,**
**dass** das Trägerpartikel einen Durchmesser von 0,5-10 µm aufweist.

32. Vorrichtung zur Bestimmung von lumineszierenden Molekülen, insbesondere zur Durchführung eines Verfahrens nach einem der Ansprüche 1 bis 31, umfassend
(a) einen Träger mit mehreren separaten Behältnissen oder mit einer Mikrokanalstruktur mit einem oder mehreren Mikrokanälen zur Aufnahme einer Probe, die zu bestimmende lumineszierende Moleküle enthält,
(b) eine optische Anregungseinrichtung, umfassend eine Lichtquelle, ein diffraktives optisches Element (4, 14) zur Aufspaltung von hindurchtretendem Licht in multiple Teilstrahlen (6, 16) und eine Fokussieroptik (8, 18) zur Fokussierung von hindurchtretenden multiplen Teilstrahlen in multiple konfokale Volumenelemente mit einer Größe von 10⁻¹⁸ bis 10⁻⁹ l zur Anregung von Lumineszenz in den multiplen konfokalen Volumenelementen und
(c) eine optische Detektionseinrichtung zum Nachweis von Lumineszenz aus den multiplen konfokalen Volumenelementen.

33. Vorrichtung nach Anspruch 32,
**dadurch gekennzeichnet,**
**dass** der Träger eine Mikrostruktur mindestens 10 separaten Behältnissen zur Aufnahme von Proben umfasst.

34. Verwendung eines diffraktiven optischen Elements, das multiple Teilstrahlen erzeugt, zur parallelen Bestimmung von molekularen Wechselwirkungen in multiplen konfokalen Volumenelementen mit einer Größe von 10⁻¹⁸ bis 10⁻⁹ l, durch Fluoreszenz-Korrelationsspektroskopie oder durch dynamische Laserlichtstreuung.

## Claims

1. Method for determining luminescent molecules by means of optical excitation in confocal measurement volumes, comprising the steps of:
(a) providing a sample comprising luminescent molecules,
(b) irradiating the sample using an optical excitation device comprising a light source, a diffractive optical element (4, 14) for splitting light passing through into multiple partial rays (6, 16), and a focusing optical system (8, 18) for focusing multiple partial rays (10) passing through into multiple confocal volume elements having a size of from 10⁻¹⁸ to 10⁻⁹ l, and
(c) capturing emission radiation from the multiple confocal volume elements.

2. Method according to claim 1, **characterised in that** the luminescent molecules are selected from luminescence-marked detection reagents which bind to an analyte present in the sample.

3. Method according to either claim 1 or claim 2, **characterised in that** the determination includes measuring a cross-correlated signal originating from a complex which contains at least two different luminescence markings and consists of analyte and detection reagent(s).

4. Method according to either claim 1 or claim 2, **characterised in that** the determination includes measuring a signal originating from a luminescence-marked detection reagent, the luminescence intensity and/or/or decay time of the detection reagent being different when it is bound to the analyte than when it is not.

5. Method according to claim 4, **characterised in that** the differences in the luminescence intensity and/or decay time are caused by quenching or energy transfer processes.

6. Method according to any of the preceding claims, **characterised in that** the determination comprises a nucleic acid hybridisation, one or more luminescence-marked probes binding to a target nucleic acid.

7. Method according to any of the preceding claims, **characterised in that** the determination comprises an enzymatic reaction.

8. Method according to any of the preceding claims, **characterised in that** the determination comprises a nucleic acid amplification, in particular a thermocycling process.

9. Method according to any of the preceding claims, **characterised in that** the determination comprises a mutation analysis for nucleic acids.

10. Method according to any of the preceding claims, **characterised in that** the determination comprises a gene expression analysis for nucleic acids.

11. Method according to any of the preceding claims, **characterised in that** the determination comprises measuring a temperature-dependent melting point curve during a nucleic acid hybridisation.

12. Method according to any of the preceding claims, **characterised in that** the determination comprises a particle selection.

13. Method according to any of the preceding claims, **characterised in that** the determination comprises a nucleic acid sequencing.

14. Method according to any of the preceding claims, **characterised in that** a laser is used as the light source.

15. Method according to any of the preceding claims, **characterised in that** the diffractive optical element used is a three-dimensional optical grating which is optionally applied to an optically transparent carrier and diffracts light passing through and generates a predetermined diffraction pattern, comprising multiple partial rays.

16. Method according to any of the preceding claims, **characterised in that** the multiple partial rays are formed by first-order interferences.

17. Method according to any of the preceding claims, **characterised in that** a light beam is split into from 2 to 32, in particular from 4 to 16, partial rays.

18. Method according to any of the preceding claims, **characterised in that** the confocal volume elements have a size of from 10⁻¹⁸ to 10⁻¹².

19. Method according to any of the preceding claims, **characterised in that** a separate detector or a spatially resolving detection matrix is used to capture emission radiation from each of the multiple confocal volume elements.

20. Method according to any of the preceding claims, **characterised in that** the distance between the focusing optical system of the light source and a confocal volume element is ≥1 mm, preferably from 1.5 to 10 mm and particularly preferably from 2 to 5 mm.

21. Method according to any of the preceding claims, **characterised in that** the sample is thermally insulated from the light source and in particular from the focusing optical system.

22. Method according to any of the preceding claims, **characterised in that** the sample is provided in a carrier having a plurality of separate containers, preferably at least 10² separate containers.

23. Method according to any of the preceding claims, **characterised in that** the optical measurement arrangement has a numerical aperture of from 0.5 to 1.2.

24. Method according to any of the preceding claims, **characterised in that** the carrier contains a plurality of separate containers, preferably at least 10 separate containers, for holding samples.

25. Method according to any of claims 1 to 21, **characterised in that** the sample is provided in a microchannel structure.

26. Method according to claim 25, **characterised in that** an analyte present in the sample is fixed in place in the microchannel structure.

27. Method according to either claim 25 or claim 26, **characterised in that** an analyte present in the sample is subjected to a splitting reaction, fragments split off from the analyte being determined.

28. Method according to any of claims 25 to 27, **characterised in that** the microchannel structure has one or more channels having a diameter of from 1 to 100 µm.

29. Method according to any of the preceding claims, **characterised in that** an analyte present in the sample is coupled to a carrier particle.

30. Method according to claim 29, **characterised in that** a carrier particle made of plastics material, glass, quartz, metals, semimetals or a composite material is used.

31. Method according to either claim 29 or claim 30, **characterised in that** the carrier particle has a diameter of from 0.5 to 10 µm.

32. Apparatus for determining luminescent molecules, in particular for carrying out a method according to any of claims 1 to 31, comprising
(a) a carrier comprising a plurality of separate containers or comprising a microchannel structure having one or more microchannels for holding a sample containing luminescent molecules to be determined,
(b) an optical excitation device comprising a light source, a diffractive optical element (4, 14) for splitting light passing through into multiple partial rays (6, 16) and a focusing optical system (8, 18) for focusing multiple partial rays passing through into multiple confocal volume elements having a size of from 10⁻¹⁸ to 10⁻⁹ in order to excite luminescence in the multiple confocal volume elements, and
(c) an optical detection device for detecting luminescence from the multiple confocal volume elements.

33. Apparatus according to claim 32, **characterised in that** the carrier comprises a microstructure having at least 10 separate containers for holding samples.

34. Use of a diffractive optical element which generates multiple partial rays for parallel determination of molecular interactions in multiple confocal volume elements having a size of from 10⁻¹⁸ to 10⁻⁹ by means of fluorescence correlation spectroscopy or dynamic laser light scattering.

## Revendications

1. Procédé de détermination de molécules luminescentes par excitation optique dans des volumes de mesure confocaux, comprenant les étapes suivantes :
(a) préparation d'un échantillon comprenant des molécules luminescentes,
(b) irradiation de l'échantillon par un dispositif d'excitation optique comprenant une source lumineuse, un élément optique à diffraction (4, 14) pour la division de la lumière passante en plusieurs faisceaux partiels (6, 16) et une optique de focalisation (8, 18) pour la focalisation des multiples faisceaux partiels (10) passants en plusieurs éléments de volume confocaux d'une grandeur comprise entre 10⁻¹⁸ à 10⁻⁹ l, et
(c) interception du rayonnement d'émission des multiples éléments de volume confocaux.

2. Procédé selon la revendication 1,
**caractérisé en ce que**
les molécules luminescentes sont sélectionnées à partir de réactifs de coloration marqués par luminescence qui se lient à un analyte présent dans l'échantillon.

3. Procédé selon la revendication 1 ou 2,
**caractérisé en ce que**
la détermination comprend la mesure d'un signal de corrélation croisée provenant d'un complexe analyte et réactif(s) de coloration contenant au moins 2 marqueurs de luminescence différents.

4. Procédé selon la revendication 1 ou 2,
**caractérisé en ce que**
la détermination comprend la mesure d'un signal provenant d'un réactif de coloration, l'intensité de luminescence et/ou le temps de décroissance de luminescence du réactif de coloration étant différents lors de la liaison à l'analyte par rapport à l'état non lié.

5. Procédé selon la revendication 4,
**caractérisé en ce que**
les différences d'intensité de luminescence et/ou de temps de décroissance de luminescence sont dues à des processus d'extinction ou de transfert d'énergie.

6. Procédé selon l'une des revendications précédentes,
**caractérisé en ce que**
la détermination comprend une hybridation d'acide nucléique, une ou plusieurs sondes marquées par luminescence se liant à un acide nucléique cible.

7. Procédé selon l'une des revendications précédentes,
**caractérisé en ce que**
la détermination comprend une réaction enzymatique.

8. Procédé selon l'une des revendications précédentes,
**caractérisé en ce que**
la détermination comprend une amplification d'acide nucléique, en particulier un processus de thermorecyclage.

9. Procédé selon l'une des revendications précédentes,
**caractérisé en ce que**
la détermination comprend une analyse de mutation pour des acides nucléiques.

10. Procédé selon l'une des revendications précédentes,
**caractérisé en ce que**
la détermination comprend une analyse d'expression génétique pour des acides nucléiques.

11. Procédé selon l'une des revendications précédentes,
**caractérisé en ce que**
la détermination comprend la mesure d'une courbe de fusion en fonction de la température pour une hybridation d'acide nucléique.

12. Procédé selon l'une des revendications précédentes,
**caractérisé en ce que**
la détermination comprend une sélection de particules.

13. Procédé selon l'une des revendications précédentes,
**caractérisé en ce que**
la détermination comprend un séquençage d'acide nucléique.

14. Procédé selon l'une des revendications précédentes,
**caractérisé en ce qu'**
un laser est utilisé comme source lumineuse.

15. Procédé selon l'une des revendications précédentes,
**caractérisé en ce qu'**
est utilisé comme élément optique à diffraction un réseau de diffraction tridimensionnel, appliqué le cas échéant sur un support optique transparent comprenant une grille optique, diffractant la lumière passante et générant un motif de diffraction prédéfini comprenant plusieurs faisceaux partiels.

16. Procédé selon l'une des revendications précédentes,
**caractérisé en ce que**
les multiples faisceaux partiels sont formés par interférences de 1^{er} ordre.

17. Procédé selon l'une des revendications précédentes,
**caractérisé en ce qu'**
un faisceau lumineux est divisé en 2 à 32, en particulier en 4 à 16 faisceaux partiels.

18. Procédé selon l'une des revendications précédentes,
**caractérisé en ce que**
les éléments de volume confocaux ont une grandeur comprise entre 10⁻¹⁸ à 10⁻¹² l.

19. Procédé selon l'une des revendications précédentes,
**caractérisé en ce qu'**
un détecteur séparé ou une matrice de détection à résolution spatiale sont utilisés pour l'interception du rayonnement d'émission des multiples éléments de volume confocaux.

20. Procédé selon l'une des revendications précédentes,
**caractérisé en ce que**
la distance entre l'optique de focalisation de la source lumineuse et un élément de volume confocal est supérieure ou égale à 1 mm, avantageusement comprise entre 1,5 et 10 mm et préférentiellement comprise entre 2 et 5 mm.

21. Procédé selon l'une des revendications précédentes,
**caractérisé en ce que**
l'échantillon est thermiquement isolé de la source lumineuse et en particulier de l'optique de focalisation.

22. Procédé selon l'une des revendications précédentes,
**caractérisé en ce que**
l'échantillon est préparé dans un support avec plusieurs, préférentiellement au moins 10² récipients séparés.

23. Procédé selon l'une des revendications précédentes,
**caractérisé en ce que**
le dispositif de mesure optique a une ouverture numérique comprise entre 0,5 et 1,2.

24. Procédé selon l'une des revendications précédentes,
**caractérisé en ce que**
le support comprend plusieurs, préférentiellement au moins 10 récipients séparés pour la réception d'échantillons.

25. Procédé selon l'une des revendications 1 à 21,
**caractérisé en ce que**
l'échantillon est préparée dans une structure à microcanaux.

26. Procédé selon la revendication 25,
**caractérisé en ce qu'**
un analyte présent dans l'échantillon est fixé dans la structure à microcanaux.

27. Procédé selon la revendication 25 ou 26,
**caractérisé en ce qu'**
un analyte présent dans l'échantillon est soumis à une réaction de clivage, les fragments clivés de l'analyte étant déterminés.

28. Procédé selon l'une des revendications 25 à 27,
**caractérisé en ce que**
la structure à microcanaux comprend un ou plusieurs canaux de diamètre compris entre 1 et 100 µm.

29. Procédé selon l'une des revendications précédentes,
**caractérisé en ce qu'**
un analyte présent dans l'échantillon est couplé à une particule porteuse.

30. Procédé selon la revendication 29,
**caractérisé en ce qu'**
une particule porteuse en matière synthétique, verre, quartz, métal, semi-métal ou en matériau composite est utilisée.

31. Procédé selon la revendication 29 ou 30,
**caractérisé en ce que**
la particule porteuse a un diamètre compris entre 0,5 et 10 µm.

32. Dispositif pour la détermination de molécules luminescentes, en particulier pour l'exécution d'un procédé selon l'une des revendications 1 à 31, comprenant
(a) un support avec plusieurs récipients séparés ou avec une structure à microcanaux comprenant un ou plusieurs microcanaux pour la réception d'un échantillon contenant les molécules luminescentes à déterminer,
(b) un dispositif d'excitation optique, comprenant une source lumineuse, un élément optique à diffraction (4, 14) pour la division de la lumière passante en plusieurs faisceaux partiels (6, 16) et une optique de focalisation (8, 18) pour la focalisation des multiples faisceaux partiels (10) passants en plusieurs éléments de volume confocaux d'une grandeur comprise entre 10⁻¹⁸ à 10⁻⁹ I pour l'excitation de luminescence dans les multiples éléments de volume confocaux, et
(c) un dispositif de détection optique pour la détection de luminescence des multiples éléments de volume confocaux.

33. Dispositif selon la revendication 32,
**caractérisé en ce que**
le support comprend une microstructure d'au moins 10 récipients séparés pour la réception d'échantillons.

34. Utilisation d'un élément optique à diffraction générant plusieurs faisceaux partiels pour la détermination parallèle d'interactions moléculaires dans plusieurs éléments de volume confocaux de grandeur comprise entre 10⁻¹⁸ à 10⁻⁹ I, par spectroscopie à corrélation de fluorescence ou par diffusion dynamique de lumière laser.
